# EUROPEAN PATENT APPLICATION

(11) **EP 4 803 422 A1**
(43) Date of publication of application: **09.09.2026**
(21) Application number: 26157472.7
(22) Date of filing: 10.02.2026
(51) Int. Cl.: B64G 1/62

(54) **STRUCTURES IMPLEMENTING DESIGN FOR DEMISE**

(30) Priority: 05.03.2025 US 202563767452 P; 04.10.2025 US 202519349977
(71) Applicant: Honeywell International Inc., Charlotte, NC 28202 (US)
(72) Inventor: LEBRON, Pedro Luis, Charlotte, 28202 (US); HORKHEIMER, Donald Patrick, Charlotte, 28202 (US); DIAZ VELEZ, Claudia Isabel, Charlotte, 28202 (US)
(74) Representative: Haseltine Lake Kempner LLP

(57) **Abstract**

An apparatus comprises: a first sheet (102) of a first radiation hardened material; a second sheet (104) of a second material; and a first plurality of structures (106) connected between the first sheet (102) of the first radiation hardened material and the second sheet (104) of the second material, wherein the first plurality of structures (106) have a lower melting point than the first sheet (102) of the first radiation hardened material.

## Description

### BACKGROUND

Space debris is an area of concern for satellite operators and government entities.

### SUMMARY

An apparatus comprises: a first sheet of a first radiation hardened material; a second sheet of a second material; and a first plurality of structures connected between the first sheet of the first radiation hardened material and the second sheet of the second material, wherein the first plurality of structures have a lower melting point than the first sheet of the first radiation hardened material.

A method of manufacture comprises: positioning a first sheet of a first radiation hardened material; positioning a second sheet of a second material on a first side of the first sheet of the first radiation hardened material; positioning a first plurality of structures on the first side of the first sheet of the first radiation hardened material between the first sheet of the first radiation hardened material and the second sheet of the second material, wherein the first plurality of structures have a lower melting point than the first sheet of radiation hardened material; and connecting the first plurality of structures between the first sheet of the first radiation hardened material and the second sheet of the second material.

A housing comprises: a plurality of walls connected together to form a cavity for housing components, each wall of the plurality of walls comprising: a first sheet of a first radiation hardened material; a second sheet of a second material; and a first plurality of structures connected between the first sheet of the first radiation hardened material and the second sheet of the second material, wherein the first plurality of structures have a lower melting point than the first sheet of the first radiation hardened material.

### BRIEF DESCRIPTION OF DRAWINGS

Understanding that the drawings depict only exemplary embodiments and are not therefore to be considered limiting in scope, the exemplary embodiments will be described with additional specificity and detail through the use of the accompanying drawings, in which:
Figures 1A-1C are example structures with as plurality of rectangular shaped sheets of radiation hardened material with a plurality of structures connected between the plurality of rectangular shaped sheets or radiation hardened material.
Figures 1D-1F are example structures with as plurality of circular shaped sheets of radiation hardened material with a plurality of structures connected between the plurality of circular shaped sheets or radiation hardened material.
Figure 2 is an example housing created by connecting a plurality of rectangular shaped sheets of radiation hardened material together.
Figure 3 is an example apparatus created by connecting a plurality of apparatuses together.
Figure 4 is an example method for manufacturing an apparatus that is both radiation hardened and demisable.

In accordance with common practice, the various described features are not drawn to scale but are drawn to emphasize specific features relevant to the exemplary embodiments.

### DETAILED DESCRIPTION

In the following detailed description, reference is made to the accompanying drawings that form a part hereof, and in which is shown by way of illustration specific illustrative embodiments. However, it is to be understood that other embodiments may be utilized and that logical, mechanical, and electrical changes may be made. Furthermore, the method presented in the drawing figures and the specification is not to be construed as limiting the order in which the individual steps may be performed. The following detailed description is, therefore, not to be taken in a limiting sense.

In examples, radiation shielding robustness is a criteria used when designing components that travel outside of Earth's atmosphere, such as satellites. In examples, radiation shielding robustness can be achieved by using dense materials, such as tungsten, tantalum, molybdenum, stainless steel, etc. in the construction of components.

In examples, space debris is an area of concern for satellite operators and government entities. In examples, there is an increased sensitivity to designing spacecraft structures in such a way that its components can completely "burn up" upon re-entry into an atmosphere (such as Earth or another celestial body's atmosphere), a philosophy known as demise-ability or "Design for Demise" or "D4D". In examples, this is especially true for commercial space applications that aim for lower cost missions, where planned re-entry into a designated area (such as an ocean) becomes a challenge. In examples, spacecraft components are designed in such a way to burn-up upon re-entry into the Earth's atmosphere. In examples, commercial satellite integrators are beginning to levy requirements related to "Design for Demise" so that the entirety (or at least a substantial majority) of the satellite or other spacecraft disintegrates while coming into the atmosphere to minimize space debris. In examples, the lower altitude that components enter the atmosphere, the less that burns up and the more that survives upon landing on Earth. In examples, Design for Demise can be particularly important for commercial satellites that may not have the funding or budget to really plan out their reentry trajectory to make the spacecraft land in a particular area (such as an ocean). In examples, it is desirable to have the entire satellite or spacecraft disintegrate when it comes back into Earth's atmosphere. In examples, legislation is coming out relating to space debris that is driving the Design for Demise.

In examples, design for demise principles conflict with designing for radiation hardness. In examples, space electronics (such as magnetometers and Space Rate Sensors (SRS) often require the implementation of dense materials, also referred to as hi-Z materials, such as tungsten, tantalum, molybdenum, stainless steel, etc., which increase radiation hardness. In examples, the typical materials that are used for radiation shielding have high melting points, which runs counter to Design for Demise principles, which recommend avoiding the usage of the very materials needed for radiation shielding. In examples, tungsten is a material used in magnetometer because of the radiation hardening. In examples, tungsten has a very high melting point (approximately 3,422°C), while other less radiation hardened materials have substantially lower melting points (such as 660.3°C for aluminum). In examples, the materials necessary for radiation shielding are not compatible with design for demise.

While there may be certain plastic, or thermoplastic, materials with low melting points that can be coated for radiation shielding, structural and dynamic performance is also of importance, particularly for Inertial Measurement Units (IMUs), making the usage of coated plastic unfeasible. In examples, Design for Demise requirements are used with commercial space programs and equipment (including magnetometers (such as a Dual String Magnetometer), Space Rate Sensors (SRS), and/or Reaction Wheel (RW) assemblies) which may also require the usage of tungsten or stainless steel to attain the proper levels of radiation hardness. In examples, a Reaction Wheel (RW) assembly includes a flywheel with a larger piece of material that could also benefit from the design described herein. In examples, the Reaction Wheel (RW) assembly may be constructed using a stainless steel (or other material) wheel configured to spin and provide inertia that can used to rotate the spacecraft. In examples, thermoplastics may not be the best option based on manufacturing and performance considerations. In examples, Reaction Wheel (RW) assemblies may include large and dense components that survive reentry.

In examples, a structure (such as a cover, chassis, housing, etc.) is created in a way that it includes a plurality of thin sheets (also referred to as any of sheets, layers, plates, discrete surfaces, etc.) of radiation hardened material separated by a structure (such as pillars, a honeycomb structure, a lattice structure, and/or other geometric structure) made of another material or the same radiation hardened material. In examples, a series of really thin layers of radiation hardened material are spaced out by pillars, honeycomb structure(s), lattice structure(s), and/or other geometric structure(s) to space out the radiation hardened material while still providing and maintaining rigidity from a dynamic structural perspective. In examples, the pillars, honeycomb structure, lattice structure, and/or other geometric structure is chosen because it results in less material in this inner structure between the plurality of thin sheets of radiation hardened material, allowing the sheets and the other structure to more easily disintegrate on re-entry because there is not a large solid piece of radiation hardened material. In examples, honeycomb, lattice, and other similar structures are used because there they include less physical material than other structures and less physical material makes the parts more likely to disintegrate on reentry than large solid pieces of material (such as tungsten). In examples, at least some of the sheets may be made of higher atomic number (Z) materials, such as tungsten, while the structures (pillars/lattice/honeycomb) in between the sheets can be made of a lower atomic number (Z) materials, such as aluminum, which is more easily demisable because it has a lower melting point and is burned or broken up more easily.

In examples, analysis can be done on the structure to confirm an acceptable level of radiation hardening. In examples, additional layers of sheets of radiation hardened material and additional connecting structure may need to be added and the total thickness of the structure may be larger than a solid piece of radiation hardened material, but the overall amount of material is less and more easily broken/burned up during re-entry.

In examples, usage of additive manufacturing may allow for the design of a structural and dynamically sound enclosure, which meets required radiation shielding requirements, while lending itself for to "demise" upon re-entry (by disintegrating or "burning up") more effectively than a solid part ("hogged out" part) of the radiation hardened material (such as tungsten or stainless steel). In examples, significant advancements with respect to additive manufacturing has enabled using additive manufacturing to manufacture radiation shields for housings through material stacks. In examples, the additive manufacturing can be used for other space electronics and structures other than magnetometers, Space Rate Sensor (SRS), and/or Reaction Wheel (RW) assemblies).

In examples, any quantity of sheets can be used with any quantity of structures in-between the sheets. In examples, the creation of the structure with a non-solid core and/or core with different material than the outer sheets could be done in other ways other than additive manufacturing, such as by assembling the sheets with standoffs in-between. In examples, additive manufacturing allows the creation of structures that are more complex that wouldn't make as much sense to create using injection molding, casting, assembling, etc.

In examples, tungsten, tantalum, molybdenum, stainless steel, etc. can be deposited/3D printed using additive manufacturing. In examples, tungsten and other materials used for radiation hardening may be used in additive manufacturing using a filament or powdered form of the material and hot heads or sintering using a laser to fuse everything together even though tungsten and other materials used for radiation hardening may have higher melting points. In examples, the structure in-between the sheets of the radiation hardened material may be something different, such as sheets made of tungsten, tantalum, molybdenum, stainless steel, etc. and pillars, lattice, honeycomb structure, or other geometric structures being made out of aluminum (or something else that could more easily demise).

In examples, a housing is designed in such a way that it would have an inner wall of X thickness, an outer thickness of Y thickness, and in-between there would be a lattice, honeycomb, or other geometric design such that: (1) structural and dynamic performance would be maintained; (2) required radiation shielding levels would be achieved; and (3) a required level of "demiseability" would be met. In examples, the design process may require iteration to ensure the structural analysis, ray trace analysis, and demise analysis all pass. In examples, advancements in Model-Based System Engineering (MBSE) and topology optimization may make it feasible to envision a structural analysis, ray trace analysis, and demise analysis and their respective requirements feeding into a topology optimization workflow to define a housing cross-section layout. In examples, once the housing is designed, the housing can be produced via additive manufacturing using tungsten, stainless steel, molybdenum, or any combination thereof per the topology optimization. In examples, additive manufacturing may occur by depositing a powder comprising the material that is sintered or fused together and added upon.

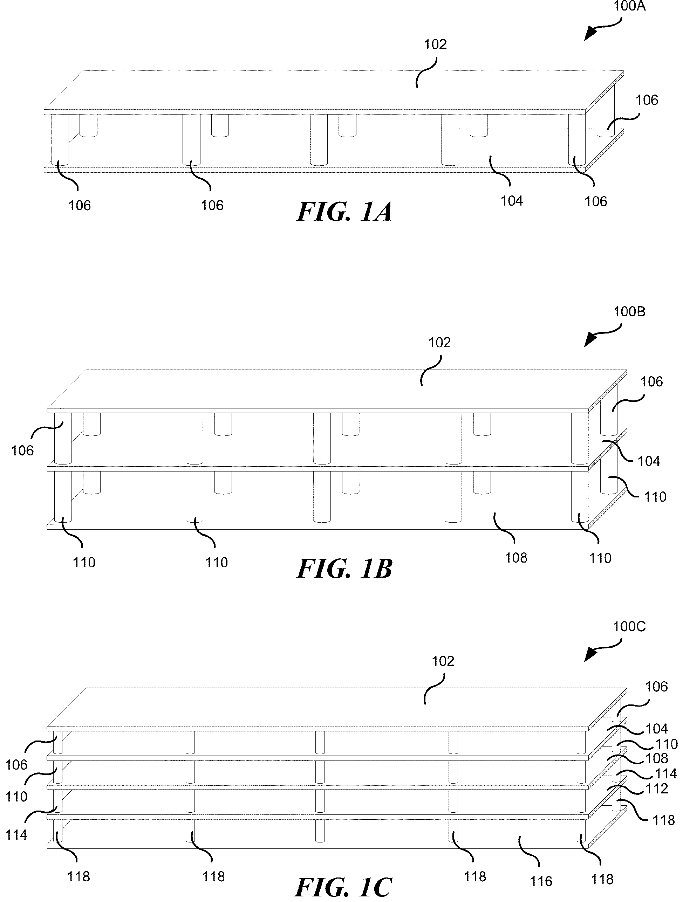

Figures 1A-1C are example structures with a plurality of rectangular shaped sheets of radiation hardened material with a plurality of structures connected between the plurality of rectangular shaped sheets or radiation hardened material. Figure 1A shows an apparatus 100A including a first sheet 102 of radiation hardened material, a second sheet 104 of material, a plurality of structures 106 connected between the first sheet 102 of radiation hardened material and the second sheet 104 of material. In examples, the first sheet 102 of radiation hardened material is made of a material having a high atomic number (Z). In examples, the atomic number is the number of protons in a nucleus of an atom. In examples, high Z materials (materials having a higher atomic number) are generally more radiation hardened than low Z materials (materials having a lower atomic number). In examples, the plurality of structures 106 have a lower melting point than the first sheet 102 of radiation hardened material. In examples, the plurality of structures 106 are made of at least one material having a high atomic number (Z). In examples, the plurality of structures 106 are made of at least one material having a low atomic number (Z). In examples, the plurality of structures 106 are made of at least one radiation hardened material. In examples, the plurality of structures 106 are not made of a radiation hardened material.

Figure 1B shows an apparatus 100B including all the features of apparatus 100A and additional features. Specifically, apparatus 100B includes the first sheet 102 of radiation hardened material, the second sheet 104 of material, the plurality of structures 106 connected between the first sheet 102 of radiation hardened material and the second sheet 104 of material, a third sheet 108 of material positioned on an opposite side of the second sheet 104 of material from the first sheet 102 of radiation hardened material, and a second plurality of structures 110 connected between the second sheet 104 of material and the third sheet 108 of material. In examples, the third sheet 108 of material is radiation hardened material. In examples, the third sheet 108 of material is made of a material having a high atomic number (Z). In examples, the second plurality of structures 110 have a lower melting point than the third sheet 108 of material. In examples, the second plurality of structures 110 are made of at least one material having a low atomic number (Z). In examples, the second plurality of structures 110 are made of at least one radiation hardened material. In examples, the second plurality of structures 110 are not made of a radiation hardened material.

Figure 1C shows an apparatus 100C including all the features of apparatus 100A and additional features. Specifically, apparatus 100C includes the first sheet 102 of radiation hardened material, the second sheet 104 of material, the plurality of structures 106 connected between the first sheet 102 of radiation hardened material and the second sheet 104 of material, a third sheet 108 of material positioned on an opposite side of the second sheet 104 of material from the first sheet 102 of radiation hardened material, a second plurality of structures 110 connected between the second sheet 104 of material and the third sheet 108 of material, a fourth sheet 112 of material positioned on an opposite side of the third sheet 108 of material from the second sheet 104 of material, a third plurality of structures 114 connected between the third sheet 108 of material and the fourth sheet 112 of material, a fifth sheet 116 of material positioned on an opposite side of the fourth sheet 112 of material from the third sheet 108 of material, and a fourth plurality of structures 118 connected between the fourth sheet 112 of material and the fifth sheet 116 of material. In examples, any of the third sheet 108 of material, the fourth sheet 112 of material, or the fifth sheet 116 of material is radiation hardened material. In examples, any of the third sheet 108 of material, the fourth sheet 112 of material, or the fifth sheet 116 of material is made of a material having a high atomic number (Z). In examples, at least one of the second plurality of structures 110, the third plurality of structures 114, and the fourth plurality of structures 118 have a lower melting point than at least one of the third sheet 108 of material and the fourth sheet 112 of material. In examples, at least one of the second plurality of structures 110, the third plurality of structures 114, and the fourth plurality of structures 118 are made of at least one material having a low atomic number (Z). In examples, at least one of the second plurality of structures 110, the third plurality of structures 114, and the fourth plurality of structures 118 are made of at least one radiation hardened material. In examples, at least one of the second plurality of structures 110, the third plurality of structures 114, and the fourth plurality of structures are not made of at least one radiation hardened material.

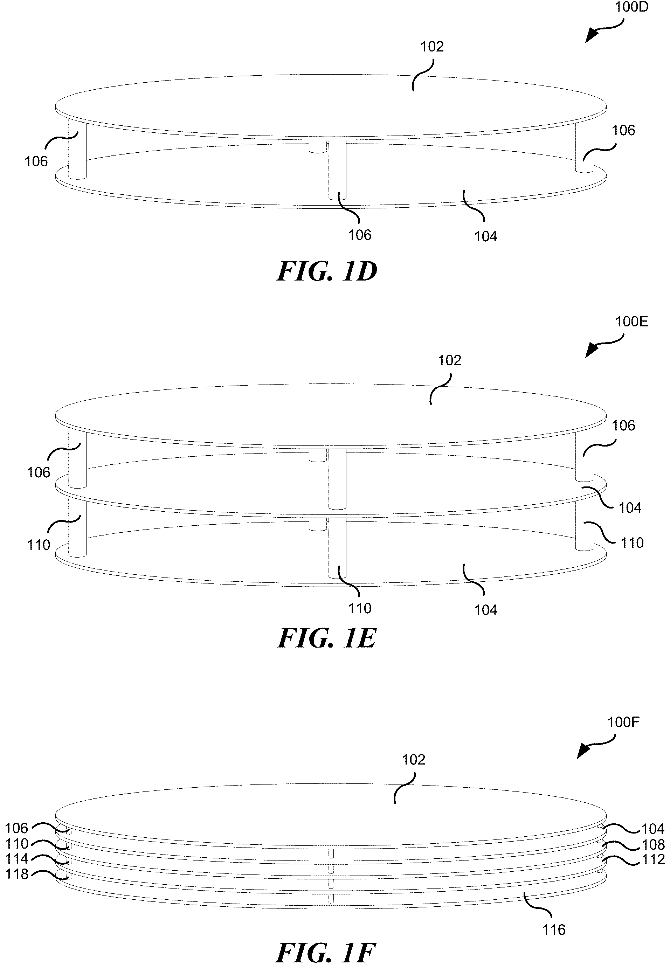

Figures 1D-1F are example structures with a plurality of circular shaped sheets of radiation hardened material with a plurality of structures connected between the plurality of circular shaped sheets or radiation hardened material. Figure 1D shows an apparatus 100D including all the features of apparatus 100A in a circular shape instead of a rectangular shape. Specifically, apparatus 100D includes the first sheet 102 of radiation hardened material, the second sheet 104 of material, and the plurality of structures 106 connected between the first sheet 102 of radiation hardened material and the second sheet 104 of material. Figure 1E shows an apparatus 100E including all the features of apparatus 100B in a circular shape instead of a rectangular shape. Specifically, apparatus 100E includes the first sheet 102 of radiation hardened material, the second sheet 104 of material, the plurality of structures 106 connected between the first sheet 102 of radiation hardened material and the second sheet 104 of material, the third sheet 108 of material positioned on the opposite side of the second sheet 104 of material from the first sheet 102 of radiation hardened material, and the second plurality of structures 110 connected between the second sheet 104 of material and the third sheet 108 of material.

Figure 1F shows an apparatus 100F including all the features of apparatus 100C in a circular shape instead of a rectangular shape. Specifically, apparatus 100F includes the first sheet 102 of radiation hardened material, the second sheet 104 of material, the plurality of structures 106 connected between the first sheet 102 of radiation hardened material and the second sheet 104 of material, the third sheet 108 of material positioned on the opposite side of the second sheet 104 of material from the first sheet 102 of radiation hardened material, the second plurality of structures 110 connected between the second sheet 104 of material and the third sheet 108 of material, the fourth sheet 112 of material positioned on the opposite side of the third sheet 108 of material from the second sheet 104 of material, the third plurality of structures 114 connected between the third sheet 108 of material and the fourth sheet 112 of material, the fifth sheet 116 of material positioned on the opposite side of the fourth sheet 112 of material from the third sheet 108 of material, and the fourth plurality of structures 118 connected between the fourth sheet 112 of material and the fifth sheet 116 of material. In examples, the apparatus takes other shapes other than rectangular or circular. In examples greater quantities of layers of sheets of material and layers of structures between the sheets of radiation hardened material are used than shown in any of Figures 1A-1F and the quantity of layers of sheets and layers of structures is not limited to any specific quantity.

In examples, any of the structures between the sheets of material (such as any of structures 106, structures 110, structures 114, or structures 118) can be small pillars spaced in a particular way apart from each other, a lattice structure, a honeycomb type structure, or any other type of structure that provides rigidity to help with dynamical structural requirements while still being demisable. In examples, by splitting the thickness of a single plate of less demisable material into smaller sheets having less mass, while still having the structures connecting the sheets, structural rigidity can still be provided while the structure can still more easily be broken apart. In examples, it may be necessary to increase the quantity of sheets in the apparatus 100 to obtain the desired radiation hardening using the sheets connected by the structures. In examples, any of the sheets of material (such as first sheet 102 of radiation hardened material, second sheet 104 of material, third sheet 108 of material, fourth sheet 112 of material, or fifth sheet 116 of material) or structures between the sheets of material (such as any of structures 106, structures 110, structures 114, or structures 118) can be manufactured using any combination of additive manufacturing or other types of manufacturing (such as injection molding, casting, machining, assembly, etc.). In examples, using the additive manufacturing allows creation of structures that are more complex, such as pillars, lattices, honeycombs, etc. In examples, the more complex structures used for connecting the sheets enables structural rigidity.

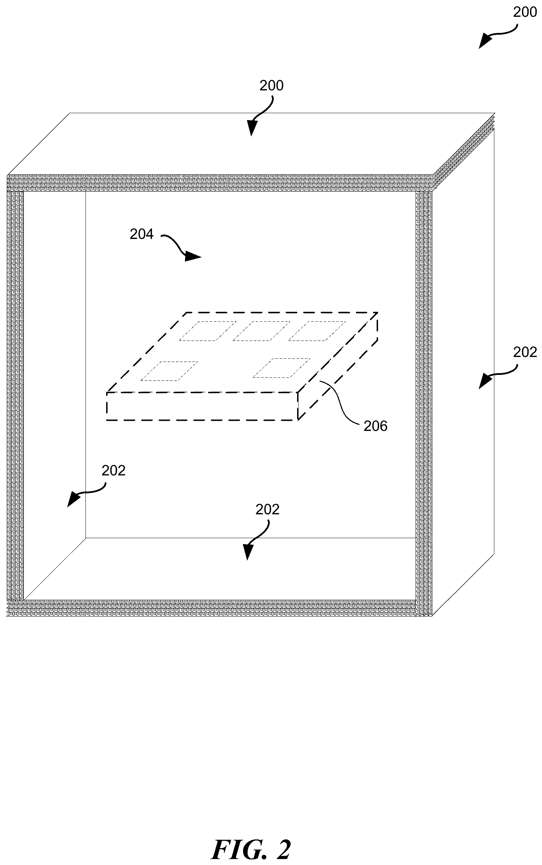

Figure 2 is an example housing 200 created by connecting a plurality of walls 202 to form a cavity 204 for housing components 206. In examples, while rectangular sheets are shown in Figure 2, it is understood that any shape can be used for the sheets of material and the shapes of the structures in-between the sheets of material. In examples, the walls 202 of the housing 200 can be formed using any of apparatus 100A, apparatus 100B, apparatus 100C, apparatus 100D, apparatus 100E, apparatus 100F, or any other similar apparatus 100. In examples, a total of six walls 202, including a front wall 202, a back wall 202, and four side walls 202 to enclose a cavity 205 within the housing 200 completely. In examples, components 206 such as electronics or other components are enclosed within the cavity 204 of the housing 200 such that the housing 200 creates a body of a broader system (such as a magnetometer, Space Rate Sensor (SRS), and/or Reaction Wheel (RW) assembly). In examples, the housing 200 benefits from the use of the apparatuses 100 for the walls 202 as it can have radiation hardening while also being demisable upon reentry into Earth's atmosphere. In examples, these benefits can be achieved using the housing 200 with walls 202 formed using apparatuses 100 instead of other less-demisable materials and structures (such as a solid tungsten plate that could be several millimeters thick and have a mass of several hundred grams). In examples, more than about 10 grams of less-demisable material can be problematic with regards to demiseability upon re-entry. In examples, the various thinner layers of material with the connecting structures in a stack allows for improved demiseability.

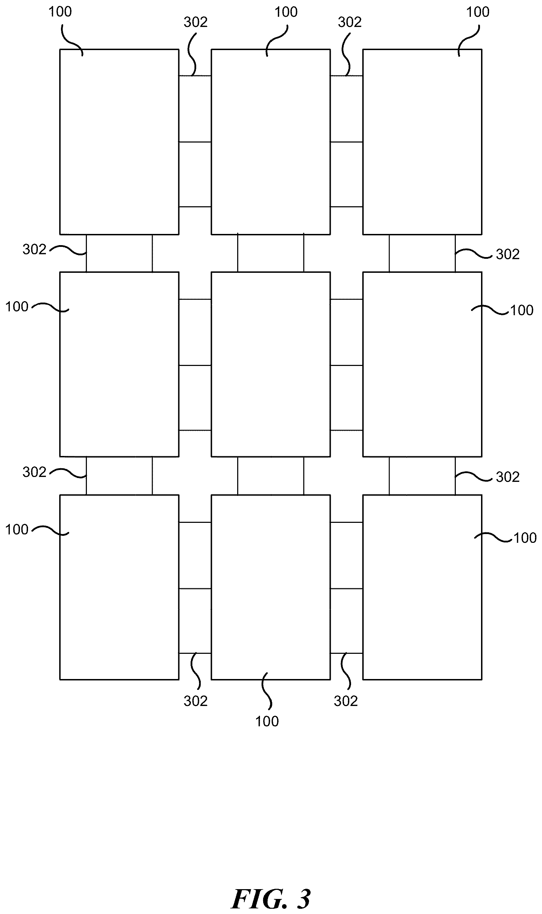

Figure 3 is an example apparatus 300 created by connecting a plurality of apparatuses 100 together (such as any of apparatus 100A, apparatus 100B, apparatus 100C, apparatus 100D, apparatus 100E, apparatus 100F, or any other similar apparatus 100). In examples, a plurality of structures 302 are used to connect the plurality of apparatuses 100 together. In examples, while rectangular shaped sheets of material are shown for the apparatuses 100 in Figure 3, it is understood that any shape can be used for the sheets of material and the shapes of the structures in-between the sheets of material. In examples, it is also understood that the structures in-between the sheets of material of the apparatuses 100 may also be radiation hardened material, but also may be less dense material that more easily melts upon re-entry into the atmosphere. In examples, it is also understood that some of the sheets in the stack of sheets of material of the apparatuses 100 may not be radiation hardened and a particular design may be configured to balance the radiation hardening with the demiseability.

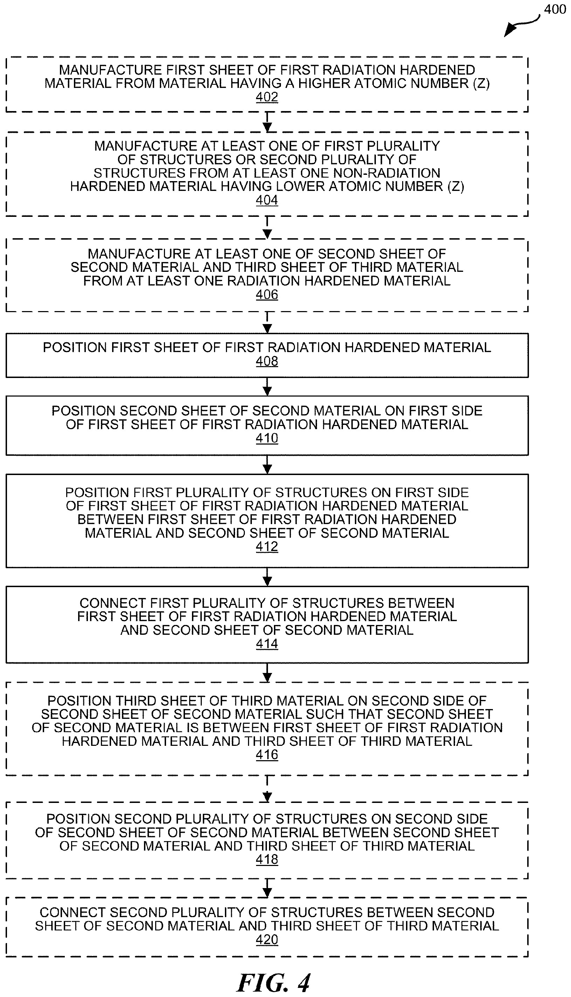

Figure 4 is an example method 400 for manufacturing an apparatus that is both radiation hardened and demisable. In examples, method 400 begins at optional block 402 with manufacturing a first sheet of radiation hardened material from material having a higher atomic number (Z). In examples, method 400 proceeds with optional block 404 with manufacturing at least one of a first plurality of structures or a second plurality of structures from at least one non-radiation hardened material having a lower atomic number (Z). In examples, method 400 proceeds with optional block 406 with manufacturing at least one of a second sheet of second material and a third sheet of third material from at least one radiation hardened material.

In examples, method 400 proceeds with block 408 with positioning a first sheet of first radiation hardened material. In examples, method 400 proceeds with block 410 with positioning a second sheet of second material on a first side of a first sheet of first radiation hardened material. In examples, method 400 proceeds with block 412 with positioning a first plurality of structures on a first side of a first sheet of a first radiation hardened material between the first sheet of first radiation hardened material and the second sheet of the second material. In examples, method 400 proceeds with block 414 with connecting the first plurality of structures between the first sheet of first radiation hardened material and the second sheet of second material.

In examples, method 400 proceeds with optional block 416 with positioning a third sheet of third material on a second side of the second sheet of the second material such that the second sheet of the second material is between the first sheet of the first radiation hardened material and the third sheet of the third material. In examples, method 400 proceeds with optional block 418 with positioning a second plurality of structures on the second side of the second sheet of the second material between the second sheet of the second material and the third sheet of the third material. In examples, method 400 proceeds with optional block 420 with connecting the second plurality of structures between the second sheet of second material and the third sheet of third material.

While detailed descriptions of one or more embodiments of the disclosure have been given above, various alternatives, modifications, and equivalents will be apparent to those skilled in the art without varying from the spirit of the disclosure. For example, while the embodiments described above refer to particular features, the scope of this disclosure also includes embodiments having different combinations of features and embodiments that do not include all of the described features. Accordingly, the scope of the present disclosure is intended to embrace all such alternatives, modifications, and variations as fall within the scope of the claims, together with all equivalents thereof. Therefore, the above description should not be taken as limiting.

### Examples

Example 1 includes an apparatus comprising: a first sheet of a first radiation hardened material; a second sheet of a second material; and a first plurality of structures connected between the first sheet of the first radiation hardened material and the second sheet of the second material, wherein the first plurality of structures have a lower melting point than the first sheet of the first radiation hardened material.

Example 2 includes the apparatus of Example 1, further comprising: wherein the first sheet of the first radiation hardened material is made of a material having a higher atomic number (Z) than non-radiation hardened materials.

Example 3 includes the apparatus of Example 2, further comprising: wherein the first plurality of structures is made of a non-radiation hardened material having a lower atomic number (Z) than the first radiation hardened material.

Example 4 includes the apparatus of any of Examples 1-3, further comprising: wherein the second sheet of the second material is made from at least one radiation hardened material having a higher atomic number (Z) than non-radiation hardened materials.

Example 5 includes the apparatus of any of Examples 1-4, further comprising: a third sheet of a third material positioned such that the second sheet of the second material is between the first sheet of the first radiation hardened material and the third sheet of the third material; and a second plurality of structures connected between the second sheet of the second material and the third sheet of the third material.

Example 6 includes the apparatus of Example 5, further comprising: wherein the first sheet of the first radiation hardened material is made of a material having a higher atomic number (Z) than non-radiation hardened materials.

Example 7 includes the apparatus of Example 6, further comprising: wherein at least one of the first plurality of structures and the second plurality of structures are made of a non-radiation hardened material having a lower atomic number (Z) than the first radiation hardened material.

Example 8 includes the apparatus of any of Examples 5-7, further comprising: wherein at least one of the second sheet of the second material and the third sheet of the third material is made from at least one radiation hardened material having a higher atomic number (Z) than non-radiation hardened materials.

Example 9 includes a method of manufacture, the method comprising: positioning a first sheet of a first radiation hardened material; positioning a second sheet of a second material on a first side of the first sheet of the first radiation hardened material; positioning a first plurality of structures on the first side of the first sheet of the first radiation hardened material between the first sheet of the first radiation hardened material and the second sheet of the second material, wherein the first plurality of structures have a lower melting point than the first sheet of radiation hardened material; and connecting the first plurality of structures between the first sheet of the first radiation hardened material and the second sheet of the second material.

Example 10 includes the method of Example 9, further comprising: manufacturing the first sheet of the first radiation hardened material of a material having a higher atomic number (Z) than non-radiation hardened materials.

Example 11 includes the method of Example 10, further comprising: manufacturing the first plurality of structures from a non-radiation hardened material having a lower atomic number (Z) than the first radiation hardened material.

Example 12 includes the method of any of Examples 9-11, further comprising: manufacturing the second sheet of the second material from at least one radiation hardened material.

Example 13 includes the method of any of Examples 9-12, further comprising: positioning a third sheet of a third material on a second side of the second sheet of the second material such that the second sheet of the second material is between the first sheet of the first radiation hardened material and the third sheet of the third material; positioning a second plurality of structures on the second side of the second sheet of the second material between the second sheet of the second material and the third sheet of the third material; and connecting the second plurality of structures between the second sheet of the second material and the third sheet of the third material.

Example 14 includes the method of Example 13, further comprising: manufacturing the first sheet of the first radiation hardened material of a material having a higher atomic number (Z) than non-radiation hardened materials.

Example 15 includes the method of Example 14, further comprising: manufacturing at least one of the first plurality of structures and the second plurality of structures from at least one non-radiation hardened material.

Example 16 includes the method of any of Examples 13-15, further comprising: manufacturing at least one of the second sheet of the second material and the third sheet of the third material from at least one radiation hardened material.

Example 17 includes a housing comprising: a plurality of walls connected together to form a cavity for housing components, each wall of the plurality of walls comprising: a first sheet of a first radiation hardened material; a second sheet of a second material; and a first plurality of structures connected between the first sheet of the first radiation hardened material and the second sheet of the second material, wherein the first plurality of structures have a lower melting point than the first sheet of the first radiation hardened material.

Example 18 includes the housing of Example 17, further comprising: wherein the first sheet of the first radiation hardened material is made of a material having a first atomic number (Z) that is higher than non-radiation hardened materials; wherein the first plurality of structures is made of a non-radiation hardened material having a lower atomic number (Z) than the first radiation hardened material; and wherein the second sheet of the second material is made from at least one radiation hardened material having a second atomic number (Z) that is higher than the non-radiation hardened materials.

Example 19 includes the housing of any of Examples 17-18, further comprising: each wall of the plurality of walls further comprising: a third sheet of a third material positioned such that the second sheet of radiation hardened material is between the first sheet of the radiation hardened material and the third sheet of the third material; and a second plurality of structures connected between the second sheet of the radiation hardened material and the third sheet of the third material.

Example 20 includes the housing of Example 19, further comprising: wherein the first sheet of the first radiation hardened material is made of a material having a first atomic number (Z) that is higher than non-radiation hardened materials; wherein at least one of the first plurality of structures and the second plurality of structures are made of a non-radiation hardened material having a lower atomic number (Z) than the first radiation hardened material; and wherein at least one of the second sheet of the second material and the third sheet of the third material is made from at least one radiation hardened material having a second atomic number (Z) that is higher than the non-radiation hardened materials.

## Claims

1. An apparatus comprising:
a first sheet of a first radiation hardened material;
a second sheet of a second material; and
a first plurality of structures connected between the first sheet of the first radiation hardened material and the second sheet of the second material, wherein the first plurality of structures have a lower melting point than the first sheet of the first radiation hardened material.

2. The apparatus of claim 1, further comprising:
wherein the first sheet of the first radiation hardened material is made of a material having a higher atomic number (Z) than non-radiation hardened materials.

3. The apparatus of claim 2, further comprising:
wherein the first plurality of structures is made of a non-radiation hardened material having a lower atomic number (Z) than the first radiation hardened material; and
wherein the lower atomic number (Z) of the non-radiation hardened material used to make the first plurality of structures than the higher atomic number (Z) of the first radiation hardened material results in the lower melting point of the non-radiation hardened material than the first sheet of the first radiation hardened material.

4. The apparatus of claim 1, further comprising:
wherein the second sheet of the second material is made from at least one radiation hardened material having a higher atomic number (Z) than non-radiation hardened materials.

5. The apparatus of claim 1, further comprising:
a third sheet of a third material positioned such that the second sheet of the second material is between the first sheet of the first radiation hardened material and the third sheet of the third material; and
a second plurality of structures connected between the second sheet of the second material and the third sheet of the third material.

6. The apparatus of claim 5, further comprising:
wherein the first sheet of the first radiation hardened material is made of a material having a higher atomic number (Z) than non-radiation hardened materials.

7. The apparatus of claim 6, further comprising:
wherein at least one of the first plurality of structures or the second plurality of structures are made of a non-radiation hardened material having a lower atomic number (Z) than the first radiation hardened material; and
wherein the lower atomic number (Z) of the non-radiation hardened material used to make the at least one of the first plurality of structures or the second plurality of structures than the higher atomic number (Z) of the first radiation hardened material results in the lower melting point of the non-radiation hardened material than the first sheet of the first radiation hardened material.

8. The apparatus of claim 5, further comprising:
wherein at least one of the second sheet of the second material and the third sheet of the third material is made from at least one radiation hardened material having a higher atomic number (Z) than non-radiation hardened materials.

9. A method of manufacture, the method comprising:
positioning a first sheet of a first radiation hardened material;
positioning a second sheet of a second material on a first side of the first sheet of the first radiation hardened material;
positioning a first plurality of structures on the first side of the first sheet of the first radiation hardened material between the first sheet of the first radiation hardened material and the second sheet of the second material, wherein the first plurality of structures have a lower melting point than the first sheet of radiation hardened material; and
connecting the first plurality of structures between the first sheet of the first radiation hardened material and the second sheet of the second material.

10. The method of claim 9, further comprising:
positioning a third sheet of a third material on a second side of the second sheet of the second material such that the second sheet of the second material is between the first sheet of the first radiation hardened material and the third sheet of the third material;
positioning a second plurality of structures on the second side of the second sheet of the second material between the second sheet of the second material and the third sheet of the third material; and
connecting the second plurality of structures between the second sheet of the second material and the third sheet of the third material.
